Europäisches Patentamt

(19) European Patent Office

Office européen des brevets

(11) Publication number : **0 533 338 A2**

(12) **EUROPEAN PATENT APPLICATION**

(21) Application number : **92307202.9**

(22) Date of filing : **06.08.92**

(51) Int. Cl.⁵ : **G10L 5/00**

(30) Priority : **16.08.91 US 746444**

(43) Date of publication of application :
**24.03.93 Bulletin 93/12**

(84) Designated Contracting States :
**DE ES FR GB IT**

(71) Applicant : **AMERICAN TELEPHONE AND TELEGRAPH COMPANY**
**32 Avenue of the Americas**
**New York, NY 10013-2412 (US)**

(72) Inventor : **Rabiner, Lawrence Richard**
**58 Sherbrook Drive**
**Berkeley Heights, New Jersey 07922 (US)**

(74) Representative : **Watts, Christopher Malcolm Kelway, Dr. et al**
**AT & T (UK) Ltd. 5, Mornington Road**
**Woodford Green Essex, IG8 0TU (GB)**

(54) **Interface method and apparatus for information services.**

(57) A method and apparatus are provided for resolving uncertainty in information provided to an information service. A database stores a list of one or more likely responses to an explicit or implicit request for information. Received information from a user in response to a request is compared to one or more of the likely responses in the list to identify such received information. Associated with each likely response is an *a priori* probability that the response will be provoked by the request. *A priori* probabilities may be based on, among other things, training with a user or a back-up procedure for resolving uncertainty. In comparing received information to a likely responses, a comparison score is generated. A comparison score is checked to determine whether it is within a range of acceptable comparison scores. If so, received information may be identified. If not, a back-up uncertainty resolution technique may be performed.

FIG. 2

REQUEST PROVOKING RESPONCE    50

RECEIVED INFORMATION FROM USER

54

51

COMPARITOR

53

CONTROL/DATA

55

56

LIKELY RESPONSES

52

DATABASE OF LIKELY RESPONSES

57

IDENTIFIED RESPONSE TO INFORMATION SERVICE

## Field of the Invention

The present invention relates generally to information services and in particular to user interfaces for information services.

## Background of the Invention

Information services are widely used to provide access to and management of information or data. Examples of information services include financial services, such as those used by individuals to purchase securities or transfer funds; database services, such as those used to store, search for and retrieve information; and telephone services, such as those used to identify and dial telephone numbers. Typically, a user interacts with an information service with the aid of a user interface. The interface may include audio and graphical features supported by an input/output (I/O) device, such as, for example, a personal computer, computer terminal, or telephone.

Information service user interfaces are often described as tree-like in nature, having nodes and branches. The nodes of the tree represent explicit or implicit questions or requests ("requests") for information to be put to a service user. User responses to such requests allow an information service to determine the type of processing and functions desired. For example, a service may request a stock name for which a price quote is sought by a user, or a telephone number which a user desires to dial. The branches of the tree represent paths between successive requests, or paths between a request and a function to be performed by the service.

Information responsive to a request may be provided to an information service by any number of input techniques and associated devices. These include speech through a microphone, a keyboard or key-pad, a pen-like stylus, bar- code or magnetic media scanning, push-buttons, touch-screen technology, etc. Depending on the nature of the information service or the tasks required of the user, one or more of such techniques may be preferred over others. For example, voice entry of information may be preferred in some instances to speed and simplify information service operation for users. Voice entry may also be preferred because there is no alternative I/O device, or because of special needs of a user (e.g., due to a handicap).

As a consequence of the nature or use of an input technique or its associated device, the content of information received by an information service interface in response to a request may be subject to some degree of uncertainty. For example, in the form received from a microphone, the content or meaning of speech signals may not be recognizable by the information service; signals received from a stylus or bar code scanner may be corrupted in some fashion; or, more than one key on a keypad or element in a touch-screen system may be depressed accidentally. In each of these cases, the content of received information is uncertain. Prior to proceeding with service processing, the information service interface needs to address such uncertainties of received information content. In the illustrative case of speech input, the information service interface must perform processing to recognize the content of spoken words such that the information will be in a form useful to the service.

## Summary of the Invention

The present invention provides a method and apparatus for resolving uncertainty in the content of information received as input to an information service. Resolution of uncertainty is provided by reference to a database containing likely responses to requests for information. A response is deemed *likely* based on an a *priori* probability that the response will be provoked by a given request. A *priori* probabilities therefore indicate with what information a given user is *likely* to respond when presented with a given request. They may be determined either quantitatively or qualitatively based on, among other things, the nature of the information service or experience with its use.

Information of uncertain content received by the service interface is compared to the likely stored responses for the purpose of resolving the uncertainty. An illustrative embodiment of the present invention may perform the comparison in any of several ways. For example, the received information may be identified as the stored response to which it most closely compares based on a similarity metric. The received information may be *tentatively* identified as discussed above and an information service user be provided with a "right of refusal" of the identified information, to be exercised in the event that the a *priori* probable responses stored in the database do not provide for a reasonable resolution of the uncertainty.

Furthermore, the received information may be identified, tentatively or otherwise, as the first stored encountered response in the database (or portion thereof with which a comparison to the received information yields an acceptable measure of similarity. This technique may be used in conjunction with an ordering of likely responses in the database based on likelihood of use.

2

An illustrative embodiment of the present invention concerns a connected-word and -digit (hereinafter "connected-word") speech recognizer for information services. The embodiment exploits the idea that user speech in the information service context is often predictable, for example, from past speech of the user, or from constraints on or the nature of a request for information. Via a training or initialization procedure, one or more lists (*i.e.*, databases) of connected-word speech are built and maintained. A list comprises the likely spoken responses to a *given* request for information by the information service. For each connected-word speech recognition task, recognition is performed in the first instance by reference to the list or set of likely responses to that request. The unknown connected-word speech is compared to the entries in the list by assembling for each list entry appropriate reference patterns (as specified by each list entry) and by using a time alignment procedure such as Dynamic Time Warping. Each comparison to a list entry yields a comparison score. The unknown speech is recognized as the list entry with the best score below a user specified or machine determined threshold. For those occasions when no comparison score is below the threshold (or when two or more scores are below the threshold), one or more back-up procedures are provided.

## Brief Description of the Drawings

Figure 1 presents an illustrative tree structure of a user interface for an information service.
Figure 2 presents an illustrative embodiment of the present invention.
Figure 3 presents a speech recognizer as an illustrative embodiment of the present invention.
Figure 4 presents an illustrative data structure for a list stored in the memory of the recognizer presented in Figure 3.
Figure 5 presents an illustrative data structure for word patterns stored in the memory of the recognizer presented in Figure 3.
Figure 6 presents an exemplary sequence of feature vectors as specified by an exemplary list response and associated word patterns presented in Figures 4 and 5, respectively.
Figures 7 and 8 present a flow chart of an illustrative process executed by a processor of the recognizer presented in Figure 3.

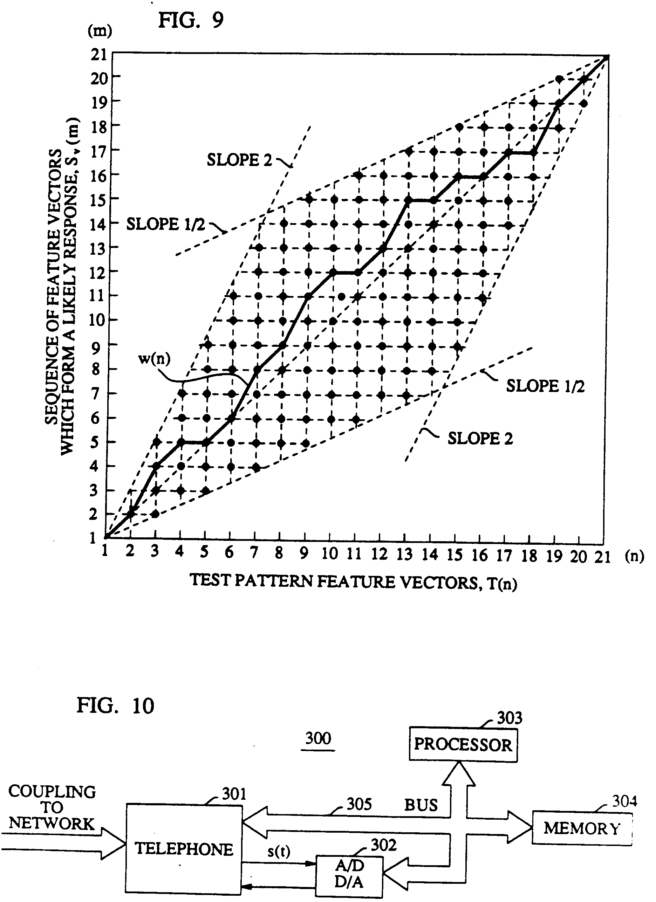

Figure 9 presents an illustrative graph of a Dynamic Time Warping alignment path, w(n).
Figure 10 presents an illustrative embodiment of a connected-digit speech recognizer for a telephone repertory dialer.

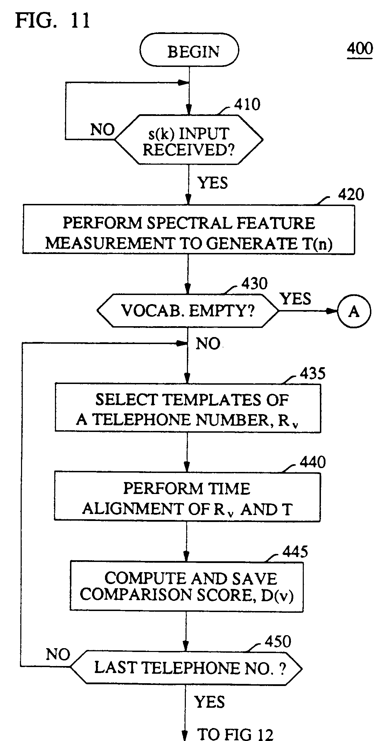

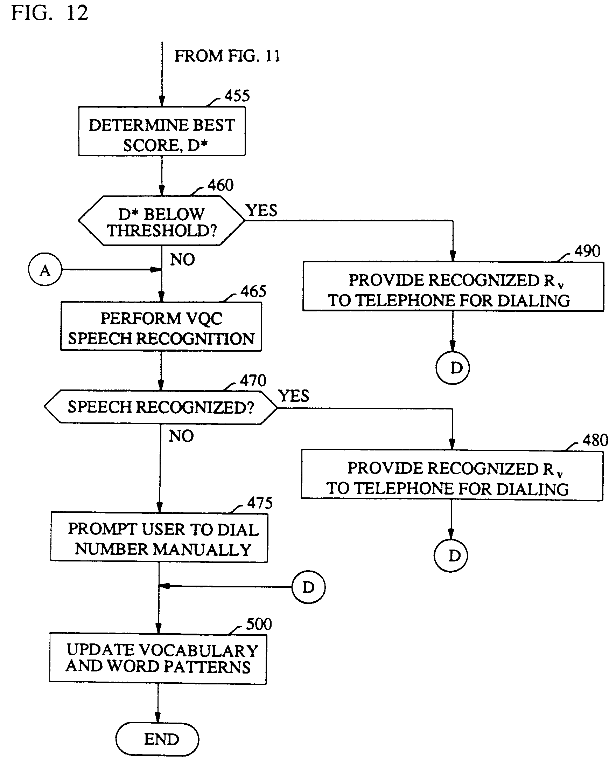

Figures 11 and 12 present a flow-chart of the operation of the processor of the illustrative embodiment presented in Figure 7.

## Detailed Description

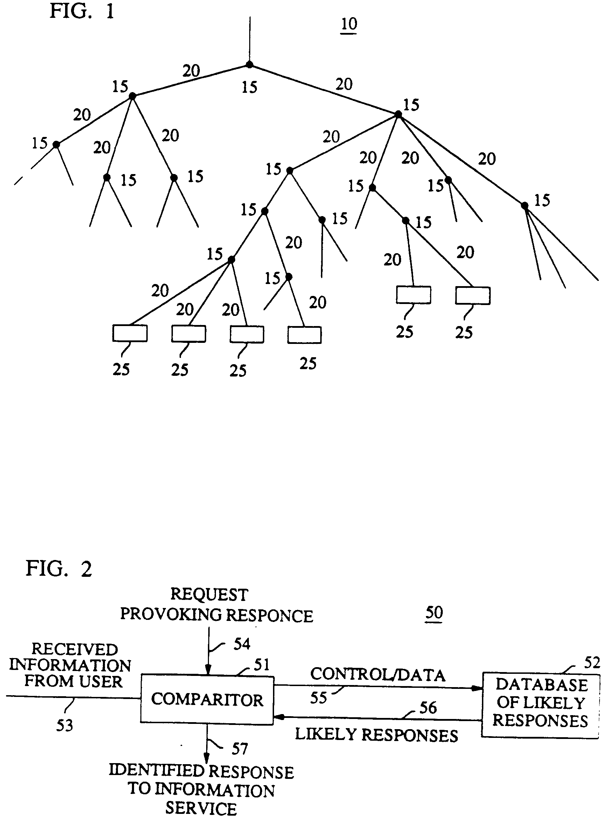

Generally, user interfaces for information services operate according to a logical tree structure. Figure 1 presents a diagram of such a tree 10. The tree 10 includes nodes 15, branches 20, and tasks 25. Each node 15 represents an explicit or implicit request for information put to the user by the information service. Each node 15 is related to other nodes 15 by one or more branches 20. Each task 25 represents a function performed by the service for the user. As such, a series of requests made and responses given defines a logical path through nodes 15 and branches 20 of the tree 10 specifying a task 25 to be performed. Since each node 15 represents a request for information, each node 15 may also represent a task of resolving uncertainty in a response.

Figure 2 presents an illustrative embodiment 50 of the present invention. The embodiment 50 provides a comparator 51 and database 52. Database 52 comprises one or more likely responses to one or more requests for information (represented by nodes 15) put to an information service user. Information 53 is received from a service user via an input device in response to a service request and is provided to the comparator 51. To resolve uncertainty in received information 53, the comparator 51 provides control/data signals 55 to scan the database 52 for likely responses 56 associated with the request 54 which provoked user response information 53. The comparator 51 compares each likely response 56 from database 52 with the received information 53 to determine which likely response 56 most closely corresponds to the received response 53. (Alternatively, the comparator 51 may tentatively identify the received response 53 as the closest likely response 56 and wait for some user interaction concerning a right of refusal; or, the comparator 51 may identify the received response 53, tentatively or otherwise, as the first likely response 56 associated with the request encountered in the database 52 with a measure of similarity within a range of acceptable similarity scores.)

The comparator 51 outputs the determined likely response as the identified response 57.

A Speech Recognizer

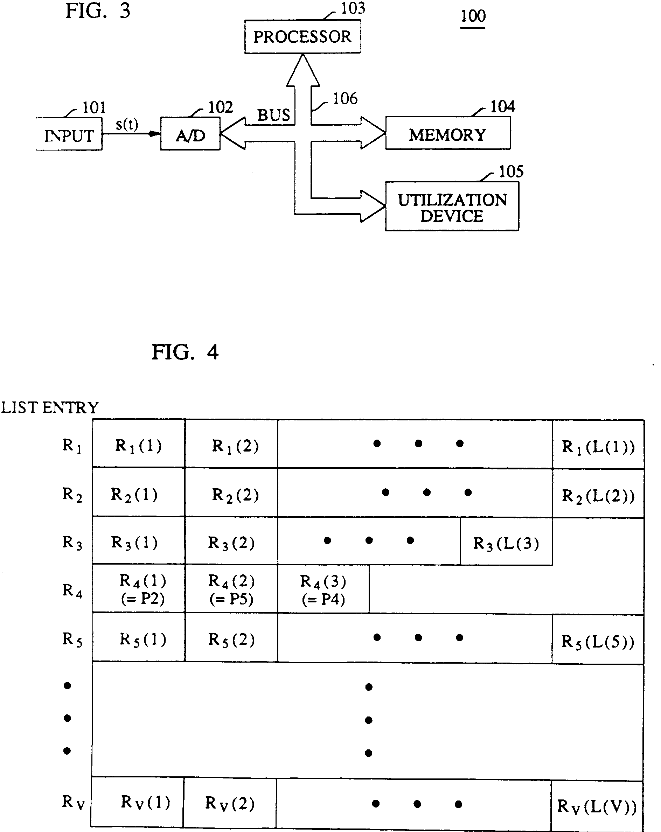

Figure 3 presents a connected-word speech recognizer as a further illustrative embodiment of the present invention. The recognizer 100 comprises input device 101 (*e.g.*, a microphone of an I/O device), an analog-to-digital (A/D) converter 102, processor 103, and memory 104. Memory 104 stores, among other things, one or more lists of likely responses to a request for information associated with a given node 15. Also shown in Figure 3 is a utilization device 105 to receive the response corresponding to the recognized speech. This utilization device 105 represents an information service. A bus 106 interconnects the A/D converter 102, the processor 103, the memory 104, and the utilization device 105. The A/D converter 102, processor 103, memory 104, and utilization device 105 may be located locally to the input device 101. Alternatively, one or more of these may be located at some distance and coupled to the local devices by a network.

Prior to considering the operation of the illustrative embodiment of Figure 3, it will be instructive to consider the contents of memory 104 as they concern a list and associated word patterns for recognizing speech.

The illustrative speech recognizer presented in Figure 3 exploits the idea that a request for information by an information service often provokes a spoken response which is predictable, for example, from past recognized (or "decoded") speech of the user or from constraints on or the nature of the request for information. Via one or more techniques discussed below, a list of likely responses to a given request for information is determined and stored in memory 104. Each likely response in the list comprises a series of one or more *references* to word patterns (*e.g.*, word templates or statistical models) stored separately in memory 104. Each word pattern represents a word used in a likely response. A multiple-word likely response therefore comprises references to multiple word patterns.

Each word pattern stored in memory 104 comprises or is based on one or more speaker-independent or -dependent feature vectors. The feature vectors of a word pattern represent the salient spectral properties of the word in question. One type of feature vector comprises a mean of one or more spectral vectors, each of which is derived from a time-aligned slice (or "frame") of a sample (or "token") of given speech. For example, each feature vector may represent a 45 msec. frame of speech (*i.e.,* a 45 msec. slice of a word), with adjacent frames separated by 15 msec. on center. Together, feature vectors for successive frames form a word pattern "template." Another type of feature vector includes a mean and covariance of a grouping of successive spectral vectors in a given token, determined over several tokens. Such means and covariances are used in statistical models of speech, such as the hidden Markov model (HMM) known in the art.

Feature vectors (for templates or statistical models) for a given word pattern may be obtained with any of several feature vector measurement techniques well known in the art, for example, Linear Predictive Coding. For a discussion of feature measurement techniques, *see* L.R. Rabiner and S.E. Levinson, *Isolated and Connected Word Recognition - Theory and Selected Applications,* Vol. Com-29, No. 5, I.E.E.E. Transactions On Communications, 621-59 (May 1981); *see also*, L.R. Rabiner and R.W. Schafer, *Digital Processing of Speech Signals*, 396-455 (1978).

Illustrative data structures concerning list and word pattern storage in memory 104 are presented in Figures 4a and 4b. As shown in Figure 4a, a list comprises V likely responses to a given request for information (such that the list is indexed by v, $1 \leq v \leq V$). Each likely response (or list entry), $R_V$, comprises a certain number, L(v), of *references* to word patterns also stored in memory 104 (such that each likely response, $R_V$, is indexed by $l$, $1 \leq l \leq L(v)$, and each $R_V$ ($l$) references a particular word pattern in memory 104).

As shown in Figure 4b, word pattern storage comprises W word patterns (such that the storage is indexed by w, $1 \leq w \leq W$) which are used in forming the responses of an associated list. Each word pattern, $P_W$, comprises a certain number, J(w), of feature vectors (such that each pattern, $P_W$, is indexed by j, $1 \leq j \leq J(w)$), and each $P_W$ (j) references a particular feature vector in a word pattern.

A given response or list entry, $R_V$, can therefore be represented as a sequence of feature vectors, $S_V(m)$, the sequence determined by the sequence of word patterns, $P_W$, specified by the response, $R_V$, and the sequence of feature vectors, $P_W$ (j), forming each word pattern. Thus, a given response or list entry comprises M(v) feature vectors $S_V$ (m), $1 \leq m \leq M(v)$).

Figure 4c presents an exemplary sequence of feature vectors, $S_V$. The sequence presented, $S_4$, is that specified by response or list entry $R_4$, which references word patterns $P_2$, $P_5$, and $P_4$, respectively, as shown in Figures 4a and 4c. Each of the referenced word patterns comprises feature vectors as specified in Figure 4b. Figure 4c shows a sequence of 12 feature vectors (M(4) = 12) which make up the string, $S_4$.

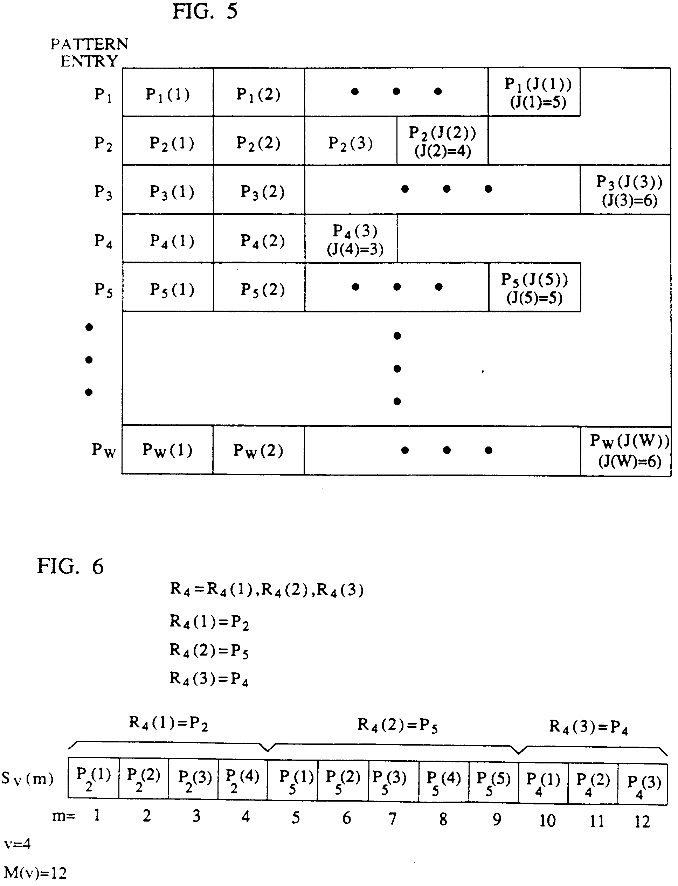

The operation of the illustrative embodiment of Figure 3 may now be discussed with reference to Figure 5. Figure 5 presents a how chart 200 showing an illustrative process executed by processor 103 of the recognizer 100. Responsive to receiving a START signal from the utilization device 105 over bus 106, processor 103 begins its process by checking for the receipt of a digital version of unknown speech to be recognized (*see* Fig. 5, 210). Unknown speech is received by input device 101 and provided to the A/D converter 102 as analog signal input, s(t). The A/D converter 102 provides a digital signal version of the unknown speech, s(k).

Once s(k) is available, the processor 103 performs spectral feature measurement processing on the digital signal, s(k), to produce a series of feature vectors, T(n), of received information. The received information feature vectors are referred to as the "test pattern," where n indexes the individual feature vectors of the pattern. The feature vectors are obtained with the same technique as employed in generating the feature vectors of the word patterns stored in memory 104 (*e.g.*, Linear Predictive Coding), and have the same frame duration and frame spacing. Feature vectors, T(n), are representative of salient spectral properties of the unknown speech signal, s(t). Thus, the test pattern may be categorized as received information. Test pattern feature vectors, T(n), are stored in memory 104 (*see* Fig. 5, 220).

To recognize a test pattern of unknown speech, the processor 103 compares the test pattern to each of the V likely responses contained in the appropriate list for the request. Each comparison takes into account the similarity of the feature vectors of the test pattern, T(n), and those feature vectors, $S_V$ (m), formed by a series of one or more word patterns specified by a likely response in the list. The comparison is made by a technique known in the art as dynamic time alignment.

Assuming the list contains one or more likely responses (see Fig. 5, 230), the processor 103 begins the time alignment process with the series of word patterns of the first likely response in the list, $R_1$ (l), for l $\leq$ 1 $\leq$ L(1). (*see* Fig. 5, 235). Time alignment is performed between the test pattern feature vectors, T(n), and a sequence of feature vectors, $S_1$(m), formed by the series of word patterns specified by the first likely response, $R_1$ (*see* Fig. 5, 240; *see also* the *Dynamic Time Alignment* section below and Figure 6). A comparison score, $D_1$, indicating the similarity or distance of the likely response with the test pattern is generated and saved (*see* Fig. 5, 245). The process is repeated for each of the likely responses in the list, $R_v$, 2 $\leq$ v $\leq$ V. As a result, a set of comparison scores, $D_v$, 1 $\leq$ v $\leq$ V (*see* Fig. 5, 250) is determined. The list response which yields the best comparison score, D*, below a threshold is deemed to be the recognized response, R* (*see* Fig. 5, 255, 260).

The threshold value may be set arbitrarily or as part a training procedure for words in pattern storage. A typical value for the threshold corresponds to one standard deviation (1 $\sigma$) of word pattern or "token" comparison scores above a mean comparison score determined during a training process for word patterns stored in memory 104 (*see* discussion of training in *List and Word Pattern Storage* section below).

If the comparison score, D*, is below the threshold (meaning that a *good* recognized response has been found), the recognized response, R*, is output to the utilization device (information service) 105. If desired, the comparison score, D*, may be output as well (*see* Fig. 5, 260 and 280).

If the comparison score, D*, is not below the threshold, or if the list does not contain any likely responses, one or more back-up procedures are used to recognize the speech. A response corresponding to recognized speech from a back-up procedure is then output to the utilization device (information service) 105 (*see* Fig. 5, 265, 270, 290). One back-up procedure which may be used comprises user manual entry of the information (*see* Fig. 5, 275). This may occur in response to a prompt of the user by the system via the I/O device. For a given embodiment, user manual entry may be the only back-up procedure needed.

Whether speech is recognized by the list or recognized or supplied by a back-up procedure, the list and pattern storage may be updated to incorporate statistics of response usage or to expand the list (in the case of back-up speech recognition) such that succeeding iterations of the speech may be recognized without resorting to a back-up scheme (*see* Fig. 5, 295). Thus, a "new" response may be added to the list as a set of references to stored word patterns, and test pattern information may be used to provide additional training for word patterns in pattern storage.

Also, as an option, an embodiment of the invention may provide the user with an opportunity to reject a recognized response. Under such circumstances, another automatic speech recognition process may be invoked or manual entry of the equivalent of spoken words can be performed.

Dynamic Time Alignment

The dynamic time alignment referenced above and in Figure 5, 240, can be accomplished by any of the techniques well-known in the art. An exemplary technique for performing one form of dynamic time alignment, namely Dynamic Time Warping (DTW) based on word templates, is discussed with reference to Figure 6 which presents a grid of points in a coordinate system. A sequence of feature vectors which make up the test pattern, T(n), is mapped to the abscissa (the independent variable) *(see, e.g.,* Figure 4c) and a sequence of feature vectors, $S_v$ (m), which make up a likely response, $R_v$, is mapped to the ordinate (the dependent variable). Each point in the grid represents the similarity or correspondence between the $n^{th}$ feature vector T(n) of the test pattern and the $m^{th}$ feature vector $S_v$ (m) of the sequence of vectors of the likely response, $R_v$. A measure of similarity may be obtained according to the Itakura log likelihood ratio, as described in the article by F. Itakura entitled, "Minimum Prediction Residual Principle Applied to Speech Recognition", *I.E.E.E. Transaction on Acoustics, Speech, and Signal Processing,* Vol. ASSP-23, No. 1, pages 67-72, February, 1975:

$$d(T(n), R_v(m)) = \log[T(n) \cdot S_v(m)] \quad (1)$$

*i.e.,* a log of the dot product of the two vectors T(n) and $S_v(m)$.

The quantity d is referred to as the "local distance" because the magnitude of d increases as the correspondence between T(n) and $S_v(m)$ decreases (of course, other measures of similarity may be used, such as correlation coefficients which increase as the correspondence between T(n) and $S_v(m)$ increases).

Since test pattern feature vector index n is defined to be the independent variable, the likely response feature vector index m may be written equivalently as a function of n, that is,

$$m = w(n), \quad (2)$$

where w(n) represents a path through the grid as shown in Figure 6. The local distance, d, of equation (1) may therefore be written as $d(T(n), S_v(w(n)))$.

In order to optimally align the test pattern feature vectors with the sequence of feature vectors of a likely response, the sum of the local distance signals $d(T(n), S_v(w(n)))$ between the feature vectors of test pattern, T(n) and the likely response, $S_v(w(n))$, is minimized:

$$D_v = \min_{w(n)} \frac{1}{N} \sum_{n=1}^{N} d(T(n), S_v(w(n))). \qquad (3)$$

The quantity $D_v$ is the comparison score (or global average distance) for a likely response, $R_v$. The likely response, $R_v$, $1 \le v \le V$, which yields the minimum comparison score, D*, is the best candidate for identifying the input test pattern, T(n).

In order to obtain a given comparison score, $D_v$, certain assumptions are made. First, is assumed that the beginning and ending frames of both the input and reference words have been accurately determined. The first input frame n=1 is thus paired with the first reference frame m=1, or:

$$w(1) = 1. \quad (4)$$

Similarly, the last input frame n=N is paired with the last reference frame m=M:

$$w(N) = M. \quad (5)$$

It is also assumed that the Itakura path constraints are obeyed:

$$0 \le w(n) - w(n-1) \le 2, \quad (6)$$

and

$$w(n) = w(n-1) \ne 0 \text{ if } w(n-1) - w(n-2) = 0. \quad (7)$$

These local path constraints guarantee that the average slope of the warping function w(n) lies between 1/2 and 2, and that the path is monotonic non-decreasing. In other words, the local path constraints define acoustically reasonable and allowable paths.

The preceding endpoint and local path constraints may be summarized by a set of global path constraints:

$$m_L(n) \le m \le m_H(n) \quad (8)$$

where

$$m_L(n) = \min[2(n-1) + 1, M - \frac{1}{2}(N-n), M] \quad (9)$$

and

$$m_H(n) = \max[\frac{1}{2}(n-1) + 1, M - 2(N-n), 1] \quad (10)$$

The global path constraints define the parallelogram (or window) shown in Figure 6. Allowable paths include only points within the parallelogram.

The path w(n) yielding a minimum distance or comparison score, $D_v$, can be found by a dynamic programming process. An accumulated distance, $D_A$, at any given pair of frames n and m is defined to be the sum of the local distances d from point (1,1) to and including the present point (n,m), along the minimum distance or "best" path between points (1,1) and (n,m). Accumulated distance $D_A$ may be generated recursively from point (1,1) to point (N,M) according to the following equation:

$$D_A(n,m) = d(T(n), S(m)) + \min[D_A(n-1,m)g(n-1,m) - D_A(n-1,m-1), D_A(n-1,m-2)], \quad (11)$$

where the constraints are

$$1 \le n \le N, \quad m_L(n) \le m \le m_H(n) \quad (12)$$

and where g(n,m) is a nonlinear weighting

$$g(n,m) = 1, \text{ if } w(n) \neq w(n-1)$$

$$= \infty, \text{ if } w(n) = w(n-1) , \tag{13}$$

to guarantee that the optimum path to (n,m) does not stay flat for two consecutive frames. The desired comparison score, $D_v$, for a likely response, $R_v$, is thereby equal to the accumulated distance $D_A$ (N, M).

This procedure may be performed for each likely response, $R_v$, providing values for $D_v$, $1 \leq v \leq V$. The test pattern, T(n), can be recognized as the likely response, $R_v$, with the minimum comparison score, D*, smaller than a threshold for "good" scores.

List and Word Pattern Storage

As discussed above, the illustrative speech recognizer embodiment employs list and pattern storage in recognizing *likely* spoken responses to a request for information. The list comprises one or more likely responses, each comprising a string of one or more references to stored word patterns. Each word pattern referenced by a likely response comprises or is based upon one or more feature vectors derived from either speaker-independent or -dependent data (that is, based on speech tokens from multiple people or a single person, respectively). The contents of list and pattern storage may be determined from knowledge of likely user responses, from experience (*i.e.*, training) with a user, or both.

Knowledge of likely user responses is often derived from the associated request for information. Thus, list responses and word patterns may be determined based upon the nature of the request (*e.g.*, determined based upon the type of information sought) or the constraints placed on a response by the terms of the request (*e.g.*, by choices given to a service user from which to select as a response). For example, if a request were to ask a user to specify a color, the nature of the request would suggest a list which included the responses "red," "blue," "orange," etc., and supporting patterns. On the other hand, if a request to specify a color included a menu of alternatives - "red," "green," or "yellow" - then these choices should be in the list as likely responses with supporting patterns provided.

Knowledge of likely responses and associated patterns may also be obtained from the nature of the information service itself. For example, if an information service is concerned with taking orders for automobile parts, such words as "sparkplug," "muffler," "headlight," and "filter," among others, might be provided by a list and pattern storage.

A list of likely responses and supporting patterns may be provided through experience or training ("training") with a user. Such training generally requires either manual user action, or the use of other speech recognition techniques well-known in the art, such as a Vector Quantization Codebook scheme (*see* Linde, Buzo, and Gray, *An Algorithm for Vector Quantization Design*, Vol. Com-28, No. 1, I.E.E.E. Transactions on Communications, 84-95 (Jan. 1980)) or the "level building" technique of Myers and Rabiner (see Myers and Rabiner, *A Dynamic Time Warping Algorithm for Connected Word Recognition*, Vol. ASSP-29, I.E.E.E. Trans. Acoust., Speech, Signal Processing, 284-97 (Apr. 1981 )). Training may be performed prior to recognizer use as part of a training mode, or during use in the form of one or more back-up procedures. Moreover, training provided by speech recognition techniques may be performed locally or off-line and provided to the system via, *e.g.*, a read-only memory.

Manually provided training may require a user to provide data equivalent to a spoken response through the use of an I/O device, such as a keyboard. This data is used to update the stored list. Manual training may also involve creating or updating patterns in word pattern storage by requiring a user(s) to speak samples (or tokens) of words one or more times. These samples, once processed by a feature measurement technique, are used, *e.g.*, to form one or more mean spectral vectors (*i.e.*, one or more feature vectors) for a word pattern. Each word pattern, $P_w$, is stored in pattern storage as a word to be referenced by list responses, $R_v$.

If a speech recognition scheme is used to provide training, the output of such a scheme may serve to augment the list and update word pattern storage. The list may be updated by including a newly recognized response as a likely response, $R_v$. Pattern storage may be updated by including recognized test pattern information in the computation of, *e.g.*, mean spectral vectors for word patterns.

Whether through knowledge or training, the determination of one or more likely responses reflects *a priori* probabilities that a given request will provoke such responses. If probable responses are known prior to information service use, then these probable responses can be provided to a list with supporting pattern storage. Regardless of whether any such responses are known prior to use, those likely responses determined through training (either during a training mode or with use) may augment the list and update pattern storage.

Referring to Figure 5, the selection of patterns of a response (*see* 235) is directed, at least initially, to those responses considered likely prior to training. However, if no responses are considered likely prior to training (*see* 230), or if the list of likely responses fails to produce a recognized response with a comparison score below the threshold for *good* recognized responses (*see* 260), one or more alternate procedures may be employed to perform speech recognition and provide the recognized speech to update the list and pattern storage (*see* 265, 270, 275, 295).

A Connected-Digit Repertory Dialer

A further illustrative embodiment of the present invention concerns a connected-digit speech recognizer for a telephone repertory dialer. With this embodiment, a user speaks a telephone number in a connected-digit fashion (*i.e.*, fluently) in response to an explicit or implicit request and the speech is recognized and provided to an automatic dialer.

In this embodiment, a list is stored which comprises telephone numbers which are likely to be dialed by a user. Likely numbers comprise numbers which either are or will be frequently dialed. Each digit or group of digits of a likely number references a sequence of feature vectors in pattern storage.

A list of likely numbers may be built in any number of ways. For example, the list may be built manually through user entry of the likely numbers directly from a telephone keypad, either as part of a special mode providing for such entry (under the control of the processor), or as part of a back-up procedure when no list entry for the number exists. Also, the list may be built automatically by observation of normal telephone usage, either locally (*i.e.*, at the telephone itself) or by a node(s) in a network to which the telephone is connected. Whether built manually or automatically, locally or by a network, the list containing likely telephone numbers may be stored locally or at an external network location.

The pattern storage comprises speaker-independent feature vectors for the words corresponding to the ten digits, zero through nine, and the usual associated words, such as "oh," "hundred," and "thousand. " In addition, the pattern storage may include patterns for one or more user command words, such as "off-hook," "dial," "hang-up," "yes," "no," etc.

Pattern storage may also include patterns for one or more names of people, businesses or services likely to be called; that is, the names associated with likely numbers in the list. In this way, a number may be dialed by the illustrative embodiment either as a result of a user speaking digits or by speaking the name of the person, business or service to be called. A representation of a telephone number in a list may therefore relate to the number itself, an associated name, or both (in which case an association in list memory between number and name representations would be established). Telephone number information received from a user to be recognized may comprise a number or an associated name.

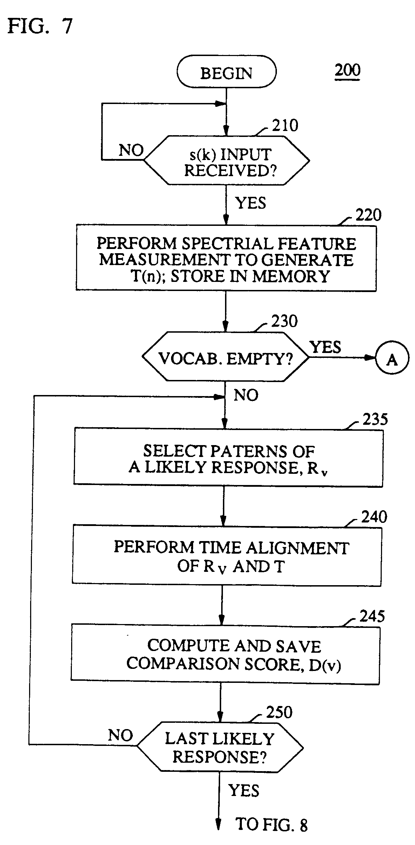

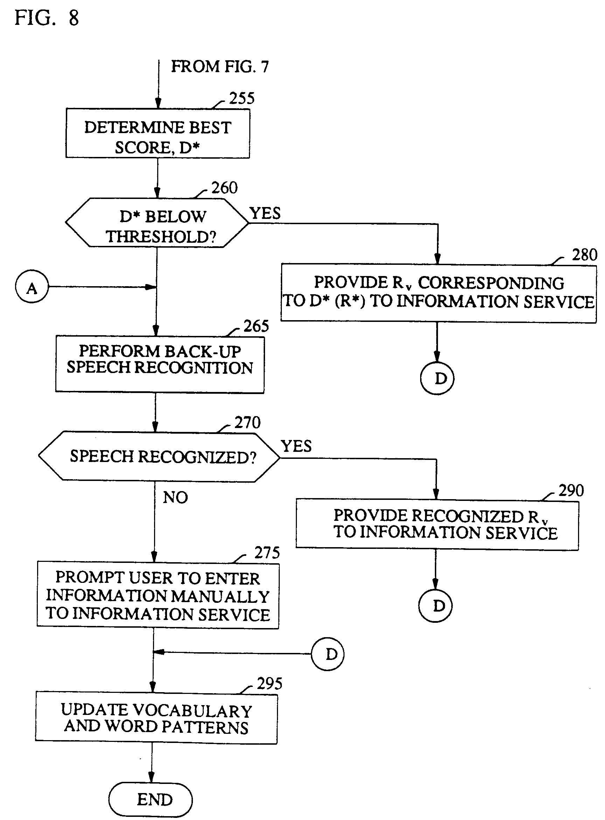

The illustrative embodiment of a connected-digit speech recognizer 300 for a telephone repertory dialer is presented in Figure 7. Telephone 301 serves as an I/O device used for entry of speech to be recognized. The telephone 301 comprises an automatic dialer which requires input of a telephone number from the speech recognizer 300. Thus, in this embodiment, the telephone 301 serves as the utilization device referenced in Figure 3. The telephone 301 is coupled to an analog-to-digital (A/D) and digital-to-analog (D/A) converter 302. The telephone 301 is also coupled to a processor 303 and memory 304 by bus 305. The A/D and D/A converter 302 is also coupled to bus 305, and thereby coupled to the processor 303 and memory 304. Processor 303 comprises a feature measurement processor and a dynamic time alignment processor. For a given illustrative embodiment, processor 303 may further comprise a back-up speech recognition processor, such as a VQC recognition processor.

The operation of the illustrative embodiment of Figure 7 is presented in the flow-chart 400 of Figure 8. Upon receipt of a START command from telephone 301, the processor 303 waits to receive a digitized version of a spoken telephone number to be dialed (*see* Fig. 8, 410). Contemporaneously, a spoken telephone number is received by the telephone 301 and provided to the A/D converter 302 which, in turn, provides the digitized version of the spoken number, s(k), to the processor 303. Responsive to receipt of s(k), the processor 303 performs feature measurement on s(k) to produce a series of feature vectors, T(n) (*see* Fig. 8, 420) for storage in memory 304. Assuming the list contains one or more likely telephone numbers, (*see* Fig. 8, 430), DTW of T(n) is performed with each number, $R_v$, in the list and a comparison score, $D_v$, is kept for each DTW performed (*see* Fig. 8, 435, 440, 445, 450).

The best comparison score, D*, from all comparison scores for the list is determined (*see* Fig. 8, 455) and, if it is below a threshold (*see* Fig. 8, 460), the list entry corresponding to the best score, R*, is deemed to be the telephone number spoken. Therefore, the number, R*, is provided to the telephone 301 via bus 305 for dialing.

If the best score, D*, is not below the threshold, or if the list contained no entries of likely numbers to be dialed, alternative or back-up techniques for speech recognition are performed. For purposes of this illustrative embodiment, a first technique comprises Vector Quantization Codebook (VQC) recognition (*see* Fig. 8, 465). VQC recognition techniques are well known in the art. *See*, Pan, Soong and Rabiner, *A Vector-Quantization-Based Preprocessor for Speaker-Independent Isolated Word Recognition,* Vol. ASSP-33, No. 3, I.E.E.E. Transactions on Acoust., Speech, and Signal Processing, 546-60 (June 1985); *see also* U.S. Patent No. 4,860,385, which is hereby incorporated by reference as if set forth fully herein; *see also* Shore and Burton, *Discrete Utterance Speech Recognition Without Time Alignment,* Vol. IT-29, No. 4, I.E.E.E. Transactions on Information Theory, 473-91 (July 1980).

If the VQC recognition is successful (*see* Fig. 8, 470), the recognized telephone number is provided to the telephone 301 for dialing (*see* Fig. 8, 490).

If the VQC recognizer fails to recognize the spoken number (*see* Fig. 8, 470), then the user is prompted by this embodiment to dial the number manually (*see* Fig. 8, 475) with telephone 301.

As it concerns any speech recognition task (*i.e.*, telephone numbers or commands), this illustrative embodiment may also provide a user with an opportunity to reject recognized speech. Under such circumstances, another technique (*e.g.*, a back-up technique) or manual entry may be employed.

Regardless of how the number is dialed, information concerning the dialed number is used to update the list (*see* Fig. 8, 500). The update to the list may involve storage of a telephone number not previously stored therein such that future attempts at dialing the number may be recognized without resorting to a back-up procedure. It may also involve using test pattern information to update the training of feature vectors for word patterns. It may further involve storing information concerning the usage of the telephone number by the user, such as the number of times the telephone number has been dialed or the date of last dialing. Such usage information may be employed in a likely response comparison scheme wherein likely responses are arranged in order of likelihood and a received response is identified, tentatively or otherwise, as the first encountered response which yields an acceptable comparison score. Such usage information may be also used as a basis for dropping or replacing a number previously stored in the list (*e.g.*, if storage space is limited).

Just as telephone numbers to be dialed may be recognized through storage in the list, so may command words which control overall recognizer function. So, for example, speaker-independent vector patterns for words such as "off- hook," "dial," "hang-up," "yes," "no," etc., may be included in pattern storage and referenced in the list to provide hands-free operation of a telephone incorporating this embodiment of the present invention. In this embodiment, the voice command "dial" may be recognized and used to prompt the processing of a spoken telephone number through the issuance of a START command.

## Claims

1. A method for resolving uncertainty in information provided to an information service, the method comprising the steps of:

    storing in a database a list of one or more likely responses to a request for information;

    receiving information from a user of the information service in response to the request for information; and

    comparing received information with one or more of the likely responses in the list to identify such received information.

2. The method of claim 1 wherein the step of storing a list of one or more likely responses in a database comprises the step of determining a likely response based on an *a priori* probability that a response will be provoked by the request.

3. The method of claim 2 wherein the step of determining a likely response comprises the step of determining an *a priori* probability based on training with a user.

4. The method of claim 3 wherein training is provided by a back-up procedure for resolving uncertainty.

5. The method of claim 2 wherein the step of determining a likely response comprises the step of determining an *a priori* probability based on the nature of the information service.

6. The method of claim 2 wherein the step of determining a likely response comprises the step of determining an *a priori* probability based on the nature of the request for information.

7. The method of claim 2 wherein the step of determining a likely response comprises the step of determining an *a priori* probability based on constraints placed on responses by the request for information.

8. The method of claim 1 wherein the step of comparing received information to one or more likely responses comprises the step of determining a comparison score for a likely response.

9. The method of claim 8 wherein the step of determining a comparison score comprises the step of determining whether a comparison score is within a range of acceptable comparison scores to identify received information.

10. The method of claim 9 further comprising the step of performing a back-up uncertainty resolution technique when no comparison score is within the range of acceptable comparison scores.

11. The method of claim 10 further comprising the step of updating the list of stored likely responses with results of the back-up uncertainty resolution technique.

12. The method of claim 1 further comprising performing a back- up uncertainty resolution technique when two or more comparison scores are within the range of acceptable comparison scores.

13. The method of claim 1 further comprising the step of maintaining likely response usage statistics based on identified received information.

14. The method of claim 1 further comprising the step of the user rejecting an identification of received information.

15. The method of claim 14 further comprising the step of performing a back-up uncertainty resolution technique.

16. A method for speech recognition comprising the steps of:
    storing in a database a list of one or more representations of likely spoken responses to a request for information;
    receiving speech information from a user in response to the request; and
    comparing received speech information to one or more representations of likely responses'in the list to recognize such received speech information.

17. The method of claim 16 wherein the likely spoken responses comprise telephone numbers.

18. The method of claim 17 further comprising the step of dialing the likely telephone number corresponding to recognized speech information.

19. The method of claim 16 wherein the step of storing a list of one or more representations of likely spoken responses comprises the steps of:
    storing one or more word patterns comprising one or more feature vectors; and
    storing one or more references to stored word patterns as a representation of a likely spoken response.

20. The method of claim 19 wherein the step of storing one or more word patterns comprises the step of determining such word patterns with a feature measurement technique.

21. The method of claim 20 wherein the feature measurement technique comprises linear predictive coding.

22. The method of claim 19 further comprising the step of updating a stored word pattern with recognized received speech information.

23. The method of claim 16 wherein the step of storing in a database a list of one or more representations of likely spoken responses comprises the step of determining a likely spoken response based on an *a priori* probability that a spoken response will be provoked by the request.

24. The method of claim 23 wherein the step of determining a likely spoken response comprises the step of determining an *a priori* probability based on training with a user.

25. The method of claim 24 wherein training is provided by a back-up procedure for recognizing speech.

26. The method of claim 25 wherein the back-up procedure comprises vector quantization codebook speech recognition on received speech information.

27. The method of claim 25 wherein the back-up procedure comprises the user supplying an equivalent to the received speech information with use of an input device.

28. The method of claim 16 wherein the step of receiving speech information comprises the step of producing a test pattern of received information by a feature measurement technique.

29. The method of claim 28 wherein the feature measurement technique comprises linear predictive coding.

30. The method of claim 16 wherein the step of comprising received speech information to one or more likely spoken responses comprises the step of determining a comparison score for a likely spoken response.

31. The method of claim 30 wherein the step of determining a comparison score for a likely response comprises the step of performing dynamic time alignment between received speech information and a likely spoken response.

32. The method of claim 31 wherein the step of performing dynamic rime alignment between received speech information and a likely spoken response comprises the step of performing dynamic time warping.

33. The method of claim 30 wherein the step of determining a comparison score comprises the step of determining whether a comparison score is within a range of acceptable comparison scores to recognize received speech information.

34. The method of claim 33 further comprising the step of performing a back-up speech recognition technique when no comparison score is within the range of acceptable comparison scores.

35. The method of claim 34 further comprising the step of updating the list of stored representations of likely spoken responses with results of the back-up speech recognition technique.

36. The method of claim 16 further comprising the step of maintaining likely response usage statistics based on recognized received speech information.

37. The method of claim 16 further comprising the steps of:
    the user rejecting a recognition of received speech information; and
    performing a back-up speech recognition technique.

38. The method of claim 37 further comprising the step of updating the list of stored representations of likely spoken responses with results of the back-up speech recognition technique.

39. The method of claim 16 further comprising the step of updating the list of stored representations of likely spoken responses with recognized received speech information.

40. The method of claim 16 wherein the step of comparing comprises the steps of:
    comparing received speech information to each stored representation of a likely spoken response; and
    determining the likely spoken response whose representation most closely compares to received speech information.

41. An apparatus for resolving uncertainty in information received from an input device to be provided to an information service, the information received in response to a request for information, the apparatus comprising:
    a database storing one or more responses to the request for information based on *a priori* probabilities that such responses will be provoked by the request; and
    a comparator, coupled to the database and the input device, for comparing received information with one or more responses in the list to identify such received information.

42. A system for recognizing spoken telephone number information, the telephone number information received from an input device, the system comprising:

a database for storing one or more representations of telephone numbers likely to be spoken; and

a comparator, coupled to the database and the input device, for comparing spoken telephone number information with one or more representations of stored telephone numbers to recognize such information as a stored representation of a telephone number.

43. The system of claim 42 further comprising an automatic dialer, coupled to the comparator, for dialing the telephone number associated with the recognized information.

44. The system of claim 43 wherein the coupling between the automatic dialer and the comparator comprises a network.

45. The system of claim 42 wherein the comparator comprises a feature measurement processor, coupled to the input device, for performing feature measurements on the spoken telephone number information.

46. The system of claim 45 wherein the comparator further comprises a dynamic rime alignment processor, coupled to the database and the feature measurement processor, for performing dynamic time alignment between feature measurements of the spoken telephone number information and one or more representations of stored telephone numbers.

47. The system of claim 42 wherein the database storing one or more representations of telephone numbers comprises:

one or more word patterns comprising one or more feature vectors; and

one or more references to stored word patterns as a representation of a likely spoken telephone number.

48. The system of claim 42 further comprising a back-up speech recognizer for recognizing spoken telephone number information when the comparator does not recognize such information.

49. The system of claim 48 wherein the back-up speech recognizer comprises a vector quantization codebook recognizer.

50. The system of claim 42 wherein the coupling between the database and the comparator comprises a network.

51. The system of claim 42 wherein the coupling between the input device and the comparator comprises a network.

52. A database for use with a speech recognition system coupled thereto, the database comprising one or more likely responses to a request for information, each such likely response having associated therewith an *a priori* probability that the response will be provoked by the request.

53. The database of claim 52 wherein the coupling of the database and the speech recognition system comprises a network.

FIG. 1

10

15 20 20 15 20
15 20 15 20 20 15
15 20 20 15
15 15 20 20 15 15
15 20 15 15 20 15 15
15 15 20 15 15
15 20 15 20 20
15 20 20 20 20 20
25 25 25 25 25 25

FIG. 2

REQUEST
PROVOKING RESPONCE                    50

RECEIVED
INFORMATION          54
FROM USER            51                                          52
                                    CONTROL/DATA          DATABASE
COMPARITOR                           55                  OF LIKELY
53                                                       RESPONSES
                                    56
                                    LIKELY RESPONSES

                     57
IDENTIFIED RESPONSE
TO INFORMATION
SERVICE

FIG. 3

FIG. 4

LIST ENTRY

| | | | | | | |
|---|---|---|---|---|---|---|
| $R_1$ | $R_1(1)$ | $R_1(2)$ | | • • • | | $R_1(L(1))$ |
| $R_2$ | $R_2(1)$ | $R_2(2)$ | | • • • | | $R_2(L(2))$ |
| $R_3$ | $R_3(1)$ | $R_3(2)$ | • • • | | $R_3(L(3)$ | |
| $R_4$ | $R_4(1)$ $(= P2)$ | $R_4(2)$ $(= P5)$ | $R_4(3)$ $(= P4)$ | | | |
| $R_5$ | $R_5(1)$ | $R_5(2)$ | | • • • | | $R_5(L(5))$ |
| • • • | | | | • • • | | |
| $R_V$ | $R_V(1)$ | $R_V(2)$ | | • • • | | $R_V(L(V))$ |

## FIG. 5

PATTERN ENTRY

| | | | | | | |
|---|---|---|---|---|---|---|
| $P_1$ | $P_1(1)$ | $P_1(2)$ | • | • | • | $P_1(J(1))$ $(J(1)=5)$ | |
| $P_2$ | $P_2(1)$ | $P_2(2)$ | $P_2(3)$ | $P_2(J(2))$ $(J(2)=4)$ | | |
| $P_3$ | $P_3(1)$ | $P_3(2)$ | • | • | • | $P_3(J(3))$ $(J(3)=6)$ |
| $P_4$ | $P_4(1)$ | $P_4(2)$ | $P_4(3)$ $(J(4)=3)$ | | |
| $P_5$ | $P_5(1)$ | $P_5(2)$ | • | • | • | $P_5(J(5))$ $(J(5)=5)$ |
| • | | | | • | | |
| • | | | | • | | |
| • | | | | • | | |
| $P_W$ | $P_W(1)$ | $P_W(2)$ | • | • | • | $P_W(J(W))$ $(J(W)=6)$ |

## FIG. 6

$R_4 = R_4(1), R_4(2), R_4(3)$

$R_4(1) = P_2$

$R_4(2) = P_5$

$R_4(3) = P_4$

$R_4(1) = P_2$      $R_4(2) = P_5$      $R_4(3) = P_4$

$S_v(m)$

| $P_2(1)$ | $P_2(2)$ | $P_2(3)$ | $P_2(4)$ | $P_5(1)$ | $P_5(2)$ | $P_5(3)$ | $P_5(4)$ | $P_5(5)$ | $P_4(1)$ | $P_4(2)$ | $P_4(3)$ |
|---|---|---|---|---|---|---|---|---|---|---|---|
| m= 1 | 2 | 3 | 4 | 5 | 6 | 7 | 8 | 9 | 10 | 11 | 12 |

$v=4$

$M(v)=12$

FIG. 7

200

BEGIN

210
NO ← s(k) INPUT RECEIVED?
YES

220
PERFORM SPECTRIAL FEATURE MEASUREMENT TO GENERATE T(n); STORE IN MEMORY

230
VOCAB. EMPTY? → YES → (A)
NO

235
SELECT PATERNS OF A LIKELY RESPONSE, $R_v$

240
PERFORM TIME ALIGNMENT OF $R_v$ AND T

245
COMPUTE AND SAVE COMPARISON SCORE, D(v)

250
NO ← LAST LIKELY RESPONSE?
YES

TO FIG. 8

FIG. 8

FROM FIG. 7

DETERMINE BEST SCORE, D* — 255

D* BELOW THRESHOLD? — 260

A

YES → PROVIDE $R_v$ CORRESPONDING TO D* (R*) TO INFORMATION SERVICE — 280 → D

PERFORM BACK-UP SPEECH RECOGNITION — 265

SPEECH RECOGNIZED? — 270

YES → PROVIDE RECOGNIZED $R_v$ TO INFORMATION SERVICE — 290 → D

NO

PROMPT USER TO ENTER INFORMATION MANUALLY TO INFORMATION SERVICE — 275

D

UPDATE VOCABULARY AND WORD PATTERNS — 295

END

## FIG. 9

## FIG. 10

FIG. 11

400

BEGIN

410
NO — s(k) INPUT RECEIVED?

YES

420
PERFORM SPECTRAL FEATURE MEASUREMENT TO GENERATE T(n)

430
VOCAB. EMPTY? — YES → A

NO

435
SELECT TEMPLATES OF A TELEPHONE NUMBER, $R_v$

440
PERFORM TIME ALIGNMENT OF $R_v$ AND T

445
COMPUTE AND SAVE COMPARISON SCORE, D(v)

450
NO — LAST TELEPHONE NO. ?

YES

TO FIG 12

FIG. 12

FROM FIG. 11

455
DETERMINE BEST
SCORE, D*

460
D* BELOW
THRESHOLD? —YES→

490
PROVIDE RECOGNIZED $R_v$
TO TELEPHONE FOR DIALING

NO

(A)→

465
PERFORM VQC
SPEECH RECOGNITION

(D)

470
SPEECH RECOGNIZED? —YES→

480
PROVIDE RECOGNIZED $R_v$
TO TELEPHONE FOR DIALING

NO

(D)

475
PROMPT USER TO DIAL
NUMBER MANUALLY

←(D)

500
UPDATE VOCABULARY
AND WORD PATTERNS

END